# EUROPEAN PATENT APPLICATION

(11) **EP 3 067 558 A1**
(43) Date of publication of application: **14.09.2016**
(21) Application number: 14860237.8
(22) Date of filing: 29.10.2014
(51) Int. Cl.: F03G 7/08, F01L 1/04

(54) **INTERNAL COMBUSTION ENGINE WITH POWER-GENERATING MEMBER**

(30) Priority: 05.11.2013 WO PCT/JP2013/079870
(71) Applicant: Nittan Valve Co., Ltd., Hadano-shi, Kanagawa 257-0031 (JP)
(72) Inventor: Lee,Tai-Hwan, Hadano-shi Kanagawa 257-0031 (JP); KAMEDA,Michihiro, Hadano-shi Kanagawa 257-0031 (JP)
(74) Representative: Zinnecker, Armin
(86) International application number: PCT/JP2014/078742
(87) International publication number: WO 2015/068622

(57) **Abstract**

[Problems to be solved]

The present invention provides an internal combustion engine equipped with an electrical power generating member which can efficiently convert vibration energy to electrical energy even when the internal combustion is idling and minimize space occupied by rectifier and other power circuit components.

[Solution]

The internal combustion engine 11 of a road vehicle includes an electrical power generating member 52 provided in a fixing bolt 26 for fixing a camshaft support member 25 for supporting a camshaft 20 and subjected to the motion of the camshaft 20 and a power storage device 152 for storing electrical power generated by the electrical power generating member 52 in response to the motion of the camshaft 20.

## Description

### FIELD OF THE INVENTION

The present invention relates to an internal combustion engine equipped with an electrical power generating member.

### BACKGROUND ART OF THE INVENTION

In order to reduce amount of carbon dioxide discharged from a vehicle, there have been made many proposals for improving fuel efficiency of a vehicle utilizing an internal combustion engine by not only vehicle manufacturers but also car parts manufacturers and fuel companies. For instance, considerable fuel efficiency can be improved considerably in a hybrid vehicle by converting kinetic energy during deceleration to electrical energy using a regenerative brake, and storing the electrical energy obtained in a secondary battery.

Further, in addition to the aforesaid fuel efficiency improving methods, it is possible to adopt means disclosed in Patent Publication No. 1 or Patent Publication No. 2. More specifically, Patent Publication No. 1 and Patent Publication No. 2 disclose means for improving vehicle fuel efficiency by converting vibration energy which is one kind of kinetic energy, to electrical energy using a piezoelectric element and storing it in a secondary battery.

### PRIOR PUBLICATIONS

### PATENT PUBLICATIONS

Patent Publication No. 1: Japanese Patent Application Laid Open No. 2011-41344
Patent Publication No. 2: Japanese Patent Application Laid Open No. 2008-30640

### DISCLOSURE OF THE INVENTION

### PROBLEMS TO BE SOLVED BY THE INVENTION

However, since the solutions disclosed in Patent Publication No. 1 and Patent Publication No. 2 are constituted so as to convert vibration energy generated while operating a vehicle to electrical energy, energy during idling of an internal combustion cannot be recovered and, therefore, energy cannot be sufficiently recovered.

Further, in Patent Publication No. 1 and Patent Publication No. 2, since the maximum amplitude of vibration of a physical object whose vibration energy is to be recovered is great, it is necessary to design a piezoelectric element, a power circuit and the like so as to withstand a large maximum amplitude. Therefore, the sizes of the piezoelectric element and power circuit components become too large relative to recoverable electrical energy.

Therefore, it is an object of the present invention to provide an internal combustion engine equipped with an electrical power generating member that can efficiently convert vibration energy to electrical energy even when the internal combustion engine is idling and minimize size increase of the piezoelectric element and power circuit components such as a rectifier.

### MEANS FOR SOLVING PROBLEMS

The above object of the present invention can be accomplished by an internal combustion engine of a road vehicle, which is an internal combustion engine equipped with an electrical power generating member, wherein the electrical power generating member is provided in a passive member subjected to motion of an actuating member constituting a component of the internal combustion engine and the electrical power generating member is constituted to generate electrical power in response to the motion of the actuating member and store the generated electrical power in an electrical storage device, wherein the actuating member is constituted by a camshaft and the passive member is constituted by a camshaft support member for supporting the camshaft and a fixing bolt for fixing the camshaft support member, wherein the electrical power generating member is provided in the fixing bolt.

The above and other objects and features of the present invention will become apparent from the following description made with reference to the accompanying drawings.

### TECHNICAL EFFECTS OF THE INVENTION

According to the invention, since the electrical power generating member is provided in the fixing bolt of the camshaft support member which is the passive member subjected to the motion of the camshaft which is the actuating member constituting a component of the internal combustion engine of the road vehicle, the vibration energy generated by the camshaft which is in operation even when the internal combustion engine is idling can be converted to electrical energy, thereby improving road vehicle fuel efficiency. Further, since the electrical power generating member is provided in the fixing bolt subjected to the motion of the camshaft, the displacement of the electrical power generating member provided in the fixing bolt falls within a certain range, thereby minimizing a space occupied by rectifier and other power circuit components.

### BRIEF DESCRIPTION OF THE DRAWINGS

[Figure 1]

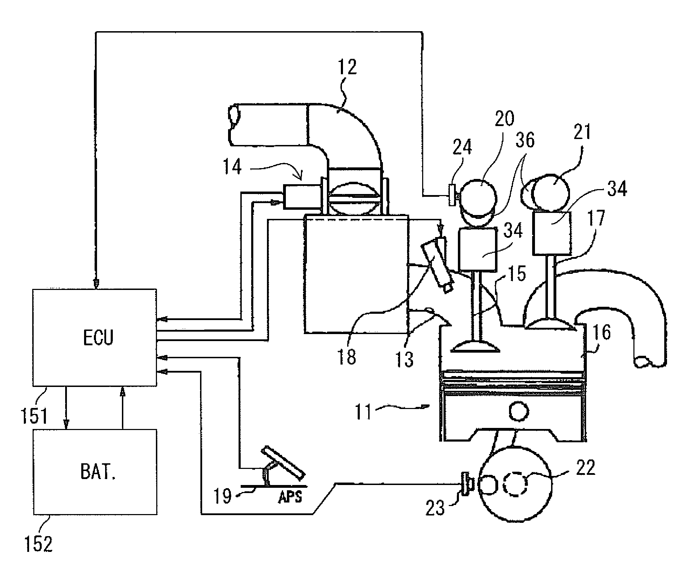

   Figure 1 is a schematic view showing a configuration in the vicinity of an internal combustion engine of a road vehicle that is a preferred embodiment of the present invention.
[Figure 2]

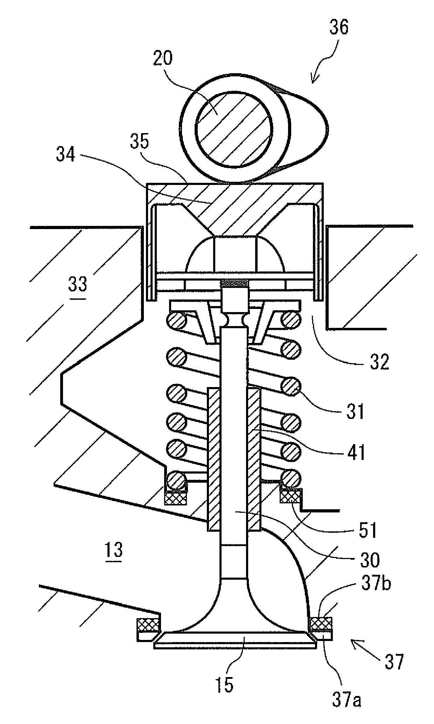

   Figure 2 is a schematic side cross sectional view showing a configuration in the vicinity of an intake valve of an internal combustion engine shown in Figure 1.
[Figure 3]

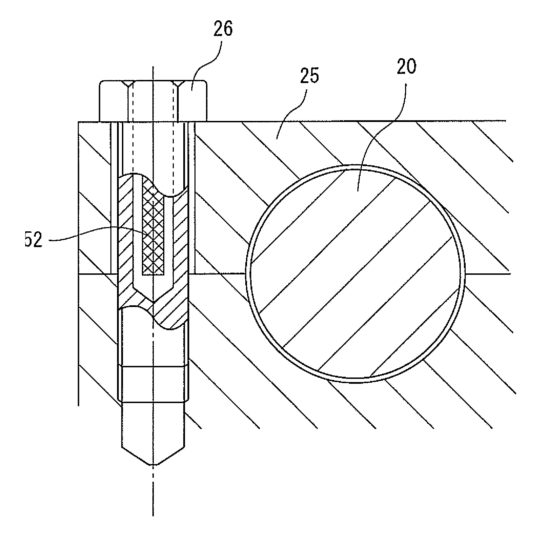

   Figure 3 is a schematic longitudinal view showing a configuration in the vicinity a camshaft of an internal combustion engine shown in Figure 1.
[Figure 4]

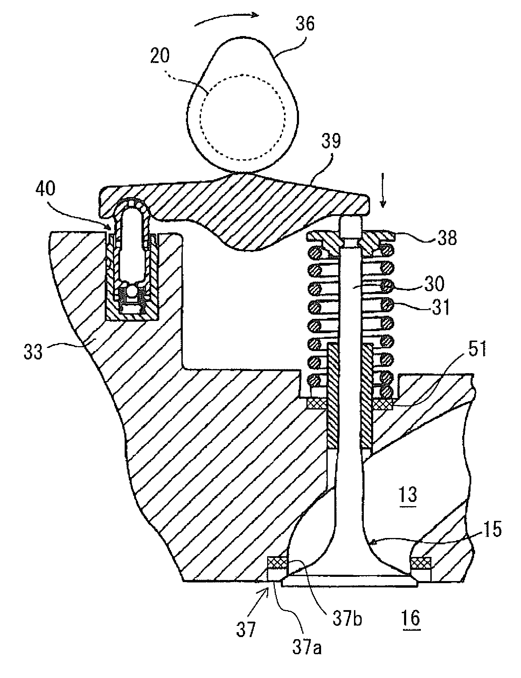

   Figure 4 is a schematic side cross sectional view showing a configuration in the vicinity of an intake valve of an internal combustion engine that is another preferred embodiment of the present invention.

### PREFERRED EMBODIMNT OF THE INVENTION

Preferred embodiments of the present invention will be explained below in detail referring to the accompanying drawings.

Figure 1 is a schematic view showing a configuration in the vicinity of an internal combustion engine of a road vehicle that is a preferred embodiment of the present invention.

In Figure 1, an internal combustion engine 11 is constituted so as to burn fuel in a combustion chamber 16 of the internal combustion engine 11, push a piston in the combustion chamber 16 by heat energy generated by combustion of fuel and produce kinetic energy for rotating running wheels.

Intake air is inspired into the combustion chamber 16 via an intake valve 15 through an intake pipe 12 in which an electrically controlled throttle valve 14 is disposed. On the other hand, exhaust gas produced by combustion of fuel is discharged from the combustion chamber 16 via an exhaust valve 17 and discharged into an atmospheric air after purification.

The intake valve 15 and the exhaust valve 17 are opened and closed by cams 36 provided on an intake camshaft 20 and an exhaust camshaft 21, respectively.

More specifically, a valve mechanism including the intake valve 15 and exhaust valve 17 is constituted to transmit the rotation of a crankshaft 22 to the intake camshaft 20 and the exhaust camshaft 21 using chains or the like, respectively, and rotate the camshaft 20 and the camshaft 21, thereby opening and closing the intake valve 15 and the exhaust valve 17 at appropriate times in accordance with the firing order.

The internal combustion engine according to this embodiment is constituted so as to directly push valve lifters 34, 34 disposed at one end of the intake valve 15 and at one end of the exhaust valve 17 using the rotating intake side camshaft 20 and the rotating exhaust side camshaft 22, thereby mechanically drive the intake valve 15 and the exhaust valve 17.

An electromagnetic fuel injection valve 18 is provided at an intake port upstream of the intake valve 15 of each cylinder. The fuel injection valve 18 is opened by an injection pulse signal from an engine control unit (ECU) 151 and is configured to inject fuel adjusted to a predetermined pressure toward the intake valve 15.

The ECU 151 has a built-in microcomputer that receives input of detection signals from various sensors. The ECU 151 performs arithmetic processing based on various detection signals so as to control the electrically controlled throttle 14, the fuel injection valve 18 and the like. The ECU 151 is powered by an electrical storage device 152 and, on the other hand, receives detection signals from a charge sensor (not shown) and the like to control the electrical storage device 152.

Illustrative examples of the various sensors include an accelerator position sensor 19 for detecting accelerator pedal depression angle, a crank angle sensor 23 for obtaining a rotation signal from the crankshaft 22, a cam angle sensor 24 for obtaining a rotation signal from the intake camshaft 20.

Figure 2 is a schematic side cross sectional view showing a configuration in the vicinity of the intake valve of the internal combustion engine shown in Figure 1.

Figure 2 shows a small diameter portion of a cam 36 provided on the intake camshaft 20 in a state making contact with a cam sliding surface 35 at a time, when the intake port 13 is closed by the intake valve 15. Each of the camshafts 20 and 21 is provided in an axial direction with a plurality of cams 36 each of which has an appropriate cam contour curve and linearly reciprocates the intake valve 15 or the exhaust valve 17 in contact therewith periodically. Each of the cam generally has an arcuate shape, namely, an oval shape, and the difference in diameter between a large diameter portion and a small diameter portion corresponds to the lift of the valve 15 or 17.

The intake valve 15 according to the first preferred embodiment is inserted into a cylinder bore 32 formed in the cylinder head 33 and a valve stem 30 constituting the shaft of the intake valve 15 is supported by a cylindrical valve guide 41 fixed to the cylinder head 33. The sealing performance of the intake valve 15 is ensured by pressing the outer circumstance portion of a trumpet-shaped portion formed at the lower end portion onto a valve seat 37 formed in the cylinder head 33 using a coil spring 31 made of metal.

The coil spring 31 is compressed by directly pressing with the cam 36 onto the upper surface of the valve lifter 34 provided on the upper end portion of the intake valve 15. As a result, the intake valve 15 is operated downwardly in the axial direction of the valve stem 30 against the spring force of the coil spring 31, whereby intake air is fed into the combustion chamber 16 from the intake port 13.

The valve seat 37 provided as a passive member of the intake valve 15 which is an actuating member constituting a component of the internal combustion engine 11, includes a valve contact portion 37a that is contacted by the outer circumference of the trumpet-shaped portion of the intake valve 15 and a first electrical power generating member 37b integrally formed with the valve contact portion 37a.

The first electrical power generating member 37b is formed of a laminated piezoelectric element made of ceramic and is constituted to generate an electromotive force when it is subjected to a compressing force along the axial direction of the intake valve 15. The first electrical power generating member 37b has a flattened doughnut shape with respect to the axial direction and piezoelectric elements are uniformly disposed in the doughnut shape portion.

Electrical power generated by the first electrical power generating member 37b is stored in the electrical storage device 152 of the road vehicle using a known power circuit (not shown) such as a rectifier circuit including diodes and the like. Here, although Figure 2 shows only a side cross sectional view of the intake valve 15, a first electrical power generating member 37b may also be provided in a valve seat 37 on the side of the exhaust valve 17.

In this embodiment, a second electrical power generating member 51 is further provided in the passive portion of the coil spring 31 which is a biasing member for assisting the reciprocation movement of the intake valve 15. The coil spring 31 is an actuating member constituting a component of the internal combustion engine 11. This second electrical power generating member 51 has the same shape as that of the first electrical power generating member 37b and is formed of the same material as that of the first electrical power generating member 37b and electrical power generated by the second electrical power generating member 51 is stored in the electrical storage device 152. Here, although Figure 2 shows that the second electrical power generating member 51 and the coil spring 31 are in contact with each other, it is possible to interpose a member having high abrasion resistance such as a metallic washer between the second electrical power generating member 51 and the coil spring 31.

According to this preferred embodiment, the electrical power generating members 37 and 51 are disposed in the passive portions (the passive portions of the valve seat 37 and the coil spring 31) which are subjected to the motions of the actuating members (the intake valve 15, the exhaust valve 17 and the coil spring 31) constituting a component of the internal combustion engine 11 of the road vehicle. Therefore, in this preferred embodiment, since the vibration energy can be converted to the electrical energy even when the internal combustion engine 11 is idling, the fuel efficiency of a vehicle can be improved. Further, since each of the electrical power generating member is provided in the passive portion which is subjected to the motion of the actuating member, the deformation of the electrical power generating members can be kept within a certain range, thereby preventing space occupied by rectifier and other circuit components from becoming large.

Further, according to this preferred embodiment, since the operating direction of the valve 15 or 17 which is an actuating member constituting a component of the internal combustion engine 11, the vibration energy of the valve 15 or 17 can be efficiently converted to electrical energy and in the case where an electrical circuit is modified so that the electrical power generating member is made to correspond to an actuating member, the electrical power generating member can serve as an impact damper, thereby enabling suppression of vibration and noise. Further, since the actuating force of the valve 15 or 17 falls within a certain range, the generated power can be kept within a certain range. Therefore, since the capacities of the power circuit components need not be set excessively high, the space for them can be reduced.

Further, according to this embodiment, since the operation direction of a spring force of the coil spring 31 which is a biasing member for assisting the reciprocating movement of the intake valve 15 and the exhaust valve 17 and the actuating member constituting a component of the internal combustion engine 11, the vibration energy of the coil spring 31 can be efficiently converted to electrical energy by the second electrical power generating member provided in a passive portion subjected to the spring force of the coil spring 31. Further, since the actuating force of the actuating member falls within a certain range, the generated power can be kept within a certain range. As a result, the capacities of power circuit components need not be set excessively high, the space for them can be reduced.

Figure 3 is a schematic longitudinal view showing a configuration in the vicinity a camshaft of an internal combustion engine shown in Figure 1.

In Figure 3, the opposite end portions of the intake camshaft 20 are pivotally supported by a camshaft support member 25 including a journal bearing and the camshaft support member 25 is fixed to the internal combustion engine 11 by fixing bolts.

In this embodiment, the intake camshaft 20 corresponds to an actuating member constituting a component of the internal combustion engine 11 and the camshaft support member 25 for supporting the intake camshaft 20 and the fixing bolts 26 correspond to passive members subjected to motion of the intake camshaft 20 as the actuating member.

In this embodiment, as shown in Figure 3, a bore is drilled downward into the fixing bolt 26 from above and a third electrical power generating member 52 is provided in the bore. The third electrical power generating member 52 is formed of a known piezo film. Every time the intake camshaft 20 is rotated and the cam 36 presses the valve lifter 34, so that the fixing bolt 26 is displaced up and down, thereby generating electrical power. The thus generated electrical power is stored in the electrical storage device 152.

Here, although only the intake camshaft 20 is shown in Figure 3, a third electrical power generating member 52 may be also provided in the fixing bolt 26 for fixing the camshaft support member 25 of the exhaust camshaft 21.

Further, the third electrical power generating member 52 may be provided in the fixing bolt 26 for fixing the crankshaft support member of the crankshaft 22 or the third electrical power generating member 52 may be provided in the fixing bolt 26 for mounting the internal combustion engine 11 on the road vehicle.

According to this preferred embodiment, since the third electrical power generating members 52 are provided in the camshaft support member 25 and the fixing bolts 26 for fixing the camshaft support member 25 which are passive members subjected to the motion of the intake camshaft 20 and exhaust camshaft 21 which are actuating members constituting a component of the internal combustion engine 11, vibration energy produced by the intake camshaft 20 and the exhaust camshaft 21 can be converted electrical energy even when the internal combustion engine is idling, whereby the fuel efficiency of the road vehicle can be improved. Further, since the third electrical power generating member 52 is provided in the fixing bolt 26 for fixing the camshaft support member 25 which is a passive member, the displacement amount of the electrical power generating member 52 can be kept within a certain range and, therefore, it is possible to prevent space occupied by rectifier and other power circuit components from becoming large.

Figure 4 is a schematic side cross sectional view for showing a configuration in the vicinity of an intake valve of an internal combustion engine which is another preferred embodiment of the present invention.

As apparent from comparing Figure 4 with Figure 2, there is difference between the internal combustion engine 11 according to this embodiment and the internal combustion engine 11 according to the embodiment shown in Figures 1 to 3 in that a rocker arm 39 is swingably provided between the intake camshaft 20 and the one end portion of the valve stem 30 of the intake valve 15 and that a hydraulic lash adjuster 40 is provided at a portion corresponding to the pivot point of the rocker arm 39 in the cylinder head 33.

Similarly to the embodiment shown in Figures 1 to 3, a doughnut shaped valve seat 37 provided at a circumferential portion of the opening of the intake port 13 has a valve contact portion 37a and a first electrical power generating member 37b. Further, a second electrical power generating member 51 is provided in a passive portion of a coil spring 31 which is a biasing member for assisting the reciprocating movement of the intake valve 15.

In this matter, in the internal combustion engine 11 according to this preferred embodiment, although the rocker arm 39 is used in the valve mechanism, electrical power can also be stored using the first electrical power generating member 37b and the second electrical power generating member 51.

Further, since the rocker arm 39 is employed in this embodiment, the lift amount of the valve can be larger than the difference between the large diameter and the small diameter of the cam 36 having an oval shaped cross section.

The present invention has thus been shown and described with reference to specific embodiments. However, it should be noted that the present invention is in no way limited to the details of the described arrangements but changes and modifications may be made without departing from the scope of the appended claims.

For example, in the above preferred embodiments, the first electrical power generating member 37b is provided in the valve seat 37 on the side of the exhaust valve 17 and the third electrical power generating member 52 is provided inside of the fixing bolt 26 for fixing the camshaft support member 25 of the exhaust camshaft 21. However, it is not absolutely necessary to provide the first electrical power generating member in the valve seat 37 on the side of the exhaust valve 17 and the third electrical power generating member 52 inside of the fixing bolt 26 for fixing the camshaft support member 25 of the exhaust cam shaft 21.

### EXPLANATION OF REFERENCE NUMERALS

- 11: an internal combustion engine
- 12: an intake pipe
- 13: an intake port
- 14: an electrically controlled throttle valve
- 15: an intake valve
- 16: a combustion chamber
- 17: an exhaust valve
- 18: a fuel injection valve
- 19: an accelerator position sensor
- 20: an intake cam shaft
- 21: an exhaust cam shaft
- 22: a crankshaft
- 23: a crank angle sensor
- 24: a cam angle sensor
- 25: a camshaft support member
- 26: a fixing bolt
- 30: a valve stem
- 31: a coil spring
- 32: a cylinder bore
- 33: a cylinder head
- 34: a valve lifter
- 35: a cam sliding surface
- 36: a cam
- 37: a valve seat
- 37a: a valve contact portion
- 37b: a first electrical power generating member
- 39: a rocker arm
- 40: a hydraulic lash adjuster
- 41: a valve guide
- 51: a second electrical power generating member
- 52: a third electrical power generating member
- 151: an engine control unit
- 152: an electrical storage device

## Claims

1. An internal combustion engine of a road vehicle, which is an internal combustion engine equipped with an electrical power generating member,
wherein the electrical power generating member is provided in a passive member subjected to motion of an actuating member constituting a component of the internal combustion engine and the electrical power generating member is constituted to generate electrical power in response to the motion of the actuating member and store the generated electrical power in an electrical storage device,
wherein the actuating member is constituted by a camshaft, and the passive members are constituted by a camshaft support member for supporting the camshaft and a fixing bolt for fixing the camshaft support member and
wherein the electrical power generating member is disposed in the fixing bolt.

2. An internal combustion engine of a road vehicle equipped with an electrical power generating member in accordance with Claim 1, which further comprises a valve serving as the actuating member constituting a component of the internal combustion engine and a valve seat serving as the passive member subjected to motion of the valve, and
wherein an electrical power generating member is provided in the valve seat to generate electrical power in response to motion of the valve.

3. An internal combustion engine of a road vehicle equipped with an electrical power generating member in accordance with Claim 2, which further comprises a biasing member serving as the actuating member, which assists a reciprocating movement of the valve and constitutes a component of the internal combustion engine, and a passive portion of the biasing member subjected to motion of the biasing member and serving as the passive member,
wherein an electrical power generating member is provided in the passive portion of the biasing member to generate electrical power in response to motion of the biasing member.
